# EUROPÄISCHE PATENTSCHRIFT

(11) **EP 1 079 148 B1**
(45) Veröffentlichungstag und Bekanntmachung des Hinweises auf die Patenterteilung: **17.07.2002**
(21) Anmeldenummer: 99116200.9
(22) Anmeldetag: 20.08.1999
(51) Int. Cl.: F16H 48/08

(54) **Kegelrad-Ausgleichsgetriebe für Kraftfahrzeuge**
Differential with conical gears for motor vehicles
Différentiel à pignons coniques pour véhicules automobiles

(43) Veröffentlichungstag der Anmeldung: 28.02.2001
(73) Patentinhaber: Ford Global Technologies, Inc., A subsidiary of Ford Motor Company, Dearborn, Michigan 48126 (US)
(72) Erfinder: Adams, Gerd, 42799 Leichlingen (DE)
(74) Vertreter: Drömer, Hans-Carsten, Dipl.-Ing.

(56) Entgegenhaltungen:
- DE-A- 2 115 593
- FR-A- 725 834
- FR-A- 2 382 627
- US-A- 1 472 629

## Beschreibung

Die Erfindung bezieht sich auf ein Kegelrad-Ausgleichsgetriebe für den Achsantrieb eines Kraftfahrzeuges, mit einem geteilten Gehäuse, in dem ein Differentialbolzen, auf dem Differentialbolzen gelagerte Ausgleichskegelräder und Abtriebskegelräder, die Achsantriebswellen antreiben, angeordnet sind, wobei das Gehäuse aus einem Antriebsteil und einem Abschlußteil besteht, die über eine zylindrische Passung verbunden und auf die Achsantriebswellen zentriert sind.

Bei den meisten bisher ausgeführten Ausgleichsgetrieben sind die beiden Gehäuseteile miteinander verschraubt. Dies erlaubt zwar eine einfache Konstruktion und eine einfache Montage, bedeutet aber auch zusätzliches Gewicht durch die Schrauben und die erforderlichen größeren Gehäusedicken im Bereich der Verschraubung sowie einen erhöhten Montageaufwand durch die zusätzlichen Schrauboperationen. Liegt die Trennstelle der beiden Gehäuseteile in der Ebene des Differentialbolzen, ergibt sich weiterhin ein höherer Fertigungsaufwand dadurch, daß die mechanische Bearbeitung der balligen Lagersitze für die Ausgleichskegelräder im Gehäuse getrennt an beiden Gehäusehälften durchgeführt werden muß.

Aus der US 1472629 ist ein Kegelrad-Ausgleichsgetriebe gemäß dem Oberbegriff des Patentanspruches 1 bekannt. Allerdings ist hier die Trennstelle der beiden Gehäusehälften wieder etwa in der Mitte des Differentialbolzens, wodurch eine einfache Bearbeitung der Ausgleichskegelrad-Sitze im Gehäuse erschwert wird. Weiterhin sind zur Sicherung und Befestigung von Antriebsteil und Abschlußteil zusätzliche Befestigungsmittel erforderlich; dort wird ein Gewindering mit Verdrehsicherung zur Befestigung vorgeschlagen.

Die der vorliegenden Erfindung zugrunde liegenden Aufgabe besteht daher darin, ein Ausgleichsgetriebe der eingangs genannten Art zu schaffen, das eine einfache Bearbeitung, eine einfache Montage mit wenig Verbindungselementen und eine hohe Drehmomentübertragung durch zwei oder mehr Ausgleichskegelräder ermöglicht.

Diese Aufgabe wird erfindungsgemäß mit den Merkmalen des Anspruchs 1 gelöst. Die Anordnung der zylindrischen Ansätze kann so sein, daß radial gesehen entweder der innere Ansatz am Antriebsteil und der äußere Ansatz am Abschlußteil oder umgekehrt der innere Ansatz am Abschlußteil und der äußere Ansatz am Antriebsteil sitzen.

Die festigkeitsmäßige Fügung von Antriebsteil und Abschlußteil erfolgt über einen Bajonettverschluß, der Teil der zylindrischen Ansätze ist. Bei der Montage werden Abschlußteil und Antriebsteil ineinandergesteckt und dann, nach Erreichen der Endposition, der Bajonettverschluß verriegelt. Zur Sicherung der beiden Gehäusehälften gegen Entriegelung dient der Differentialbolzen. Es muß mindestens eine Lagerbohrung für den Differentialbolzen geben, die durch die zylindrischen Ansätze von Antriebs- und Abschlußteil führt. Zweckmäßigerweise ist der Aufbau symmetrisch und damit ergibt sich die Anzahl der durch Antriebsteil und Abschlußteil gehenden Lagerbohrungen entsprechend der Anzahl der Ausgleichskegelräder.

Der Differentialbolzen wird nach der Montage der Gehäusehälften in seine Lagerbohrung gesteckt und durch einen Sprengring gegen Verrutschen gesichert. Damit übernimmt der Differentialbolzen neben seiner Hauptfunktion, der Lagerung der Ausgleichskegelräder, zusätzliche die Funktion der Entriegelungssicherung des Gehäusebajonettverschlußes. Ein solcher Gehäuseaufbau erlaubt eine platz- und gewichtssparende Konstruktion des Ausgleichsgetriebes, da für die kraftschlüssige Verbindung der beiden Gehäuseteile keine weiteren Fügeverbindungen notwendig sind.

Bei dem erfindungsgemäßen Gehäuse kann der Bajonettverschluß durch ein Gewinde ersetzt werden. Hier übernimmt der Differentialbolzen, der wiederum in Antriebsteil und Abschlußteil gelagert sein muß, die Aufgabe der Sicherung des Gewindes gegen gegenseitiges Verdrehen der beiden Gehäusehälften.

Als weitere Ausführungsvariante kann nur die zylindrische Passung als Verbindung der Gehäuseteile genutzt werden. Die festigkeitsmäßige Fügung erfolgt dann über die Differentialbolzen und/oder über eine Preßpassung zwischen den zylindrischen Ansätzen der Gehäuseteile. Die nicht benötigten Bajonett- bzw. Gewindeverschlüsse bedeuten eine weitere Reduzierung des Fertigungsaufwandes.

In allen vorher beschriebenen Varianten kann der Differentialbolzen auch nur im radial inneren zylindrischen Ansatz von Antriebs- und Abschlußteil gelagert sein. Hier sichert der radial äußere Ansatz den Differentialbolzen gegen Verrutschen, indem bei der Endmontage dieser Ansatz über die Bohrungen des Differentialbolzens geschoben wird. Bei der Ausführung des Gehäuses mit Bajonett- oder Gewindeverschluß wird eine zusätzliche Verdrehsicherung der beiden Gehäusehälften gegeneinander benötigt. Bei der Fügung der Gehäusehälften nur mit der Preßpassung muß diese so ausgelegt sein, daß sie die festigkeitsmäßige Verbindung der beiden Gehäusehälften sicherstellt.

Beim erfindungsgemäßen Gehäusekonzept und dem Einsatz von zwei Ausgleichskegelrädern kann der Differentialbolzen durchgehend gebaut sein und beide Ausgleichskegelräder lagern. Beim Einsatz von mehr als zwei Ausgleichskegelrädern sind alle Differentialbolzen getrennt, alle Differentialbolzen gleich ausgeführt und alle Differentialbolzen in Abtriebswellenmitte zentral in einer Bolzenaufnahme gelagert. Diese Lagerung ist hinsichtlich der Einspannsteifigkeit der Differentialbolzen angepaßt an eine gezielte Nachgiebigkeit der Differentialbolzen. Dadurch können höherbelastete Ausgleichskegelräder elastisch in tangentialer Richtung stärker deformieren als weniger belastet, wodurch ein Ausgleich bzw. eine Nivellierung der Belastungen zwischen den Ausgleichskegelrädem erfolgt. Durch die gleichmäßige Belastung aller Ausgleichskegelräder ist eine hohe Drehmomentübertragung bei kompakter Bauweise möglich.

Die Erfindung wird nachstehend im einzelnen unter Bezugnahme auf die in den Figuren dargestellten Ausführungsbeispielen näher erläutert. Es zeigen:
**Fig. 1** einen Längsschnitt durch ein erfindungsgemäßes Kegelrad-Ausgleichsgetriebe mit Bajonettverschluß;
**Fig. 2** einen Querschnitt durch ein erfindungsgemäßes Kegelrad-Ausgleichsgetriebe mit Bajonettverschluß an der Verbindung der Gehäuseteile entlang Linie II-II und einen Teilausschnitt entlang Linie III-III.
**Fig. 3** einen Längsschnitt durch ein erfindungsgemäßes Kegelrad-Ausgleichsgetriebe mit Gewindeverschluß;

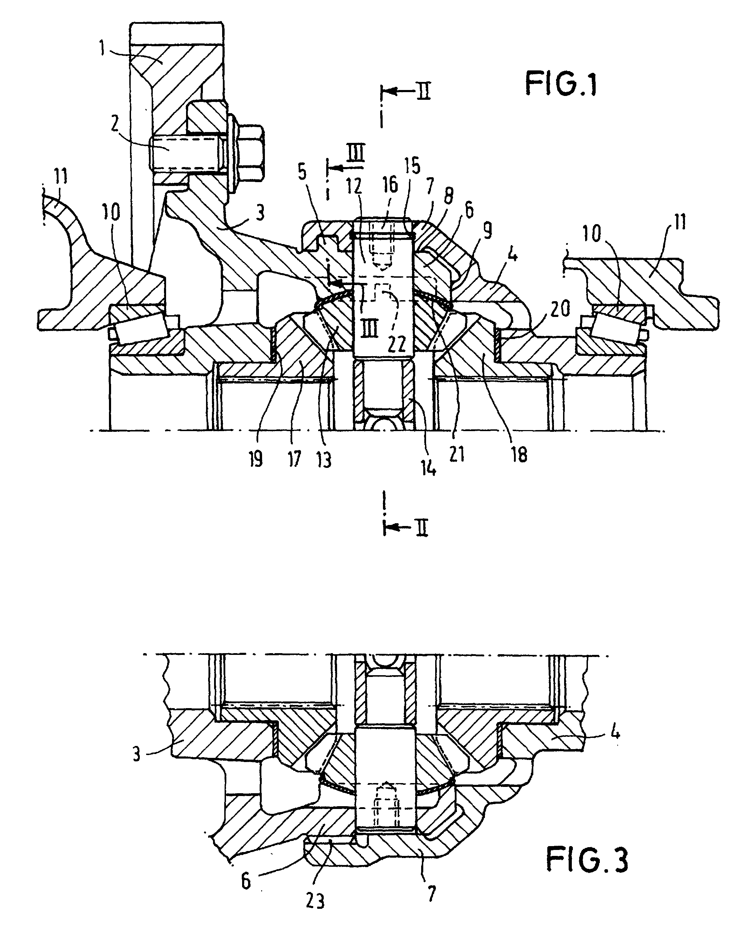

**Fig. 1** zeigt den Aufbau des Ausgleichsgetriebes. Das von einem nicht dargestellten Ritzel angetriebene Antriebsrad **1,** ausgeführt als Stirn- oder Tellerzahnrad, ist über die Schraubbolzen **2** am Antriebsteil **3** das Ausgleichsgehäuses angeflanscht. Das Abschlußteil **4** des Ausgleichsgetriebegehäuses ist über den Bajonettverschluß **5.** mit dem Antriebsteil **3** gefügt. Zwischen zylindrischem Ansatz **6** des Antriebsteiles **3** und zylindrischem Ansatz **7** des Abschlußteiles **4** ist die zylindrische Passung **8** für die Zentrierung der beiden Gehäuseteile vorgesehen. Die Kontaktfläche zwischen der Stirnfläche des zylindrischen Ansatzes **6** des Antriebsteiles und der entsprechenden Anlagefläche am Abtriebsteil **3** ist als axiale Bezugsfläche **9** für die Ausrichtung der beiden Gehäusehälften zueinander vorgesehen. Das gesamte Ausgleichsgetriebe ist mit den beiden Kegelrollenlagern **10** in einem entsprechendem Getriebegehäuse **11** gelagert.

Die Entriegelungssicherung des Bajonettverschlußes **5** erfolgt über vier Differentialbolzen **12,** die durch Antriebsteil **3** und Abschlußteil **4** geführt sind. Auf den Differentialbolzen **12** sitzen die Ausgleichskegelräder **13.** Dargestellt ist eine Konstruktion mit vier Ausgleichskegelrädern **13** und vier Differentialbolzen **12.** Die Differentialbolzen **12** sind zentral in die Bolzenaufnahme **14** gelagert. Im Falle von zwei Ausgleichskegelrädern kann die Bolzenaufnahme entfallen und ein einteiliger, durchgehender Differentialbolzen **12** vorgesehen werden. Die Arretierung der Differentialbolzen **12** erfolgt mit dem Sprengring **15,** der in einer Nut im Abschlußteil **4** einrastet. Mittels des Demontagegewindes **16** kann der Differentialbolzen **12** zu Wartungszwecken entfernt werden.

Weiterhin dargestellt sind die Abtriebskegelräder **17** und **18** mit den ebenen Anlaufscheiben **19** und **20** sowie die kugelförmigen Anlaufscheiben **21** für die axiale Lagerung der Ausgleichskegelräder **13** im Antriebsteil **3**. Die Schmierstoffversorgung für die Lagerung der Ausgleichskegelräder **13** in den Anlaufscheiben **21** erfolgt über die radial umlaufende Schmierstoffnut **22.**

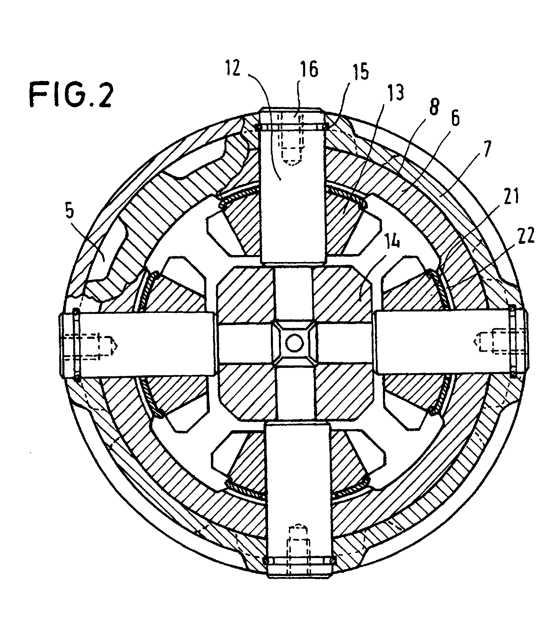

**Fig. 2** zeigt einen Querschnitt durch das Ausgleichsgetriebe im Bereich der Differentialbolzen **12** gemäß Linie **II-II** und einen Teilausschnitt in Höhe des Bajonettverschlußes **5** gemäß Linie **III-III.** Das Ausgleichsgehäuses ist geteilt durch die zylindrische Paßfläche **8** zwischen dem zylindrischen Ansatz **6** des Antriebsteiles **3** und dem zylindrischen Ansatz **7** des Abschlußteiles **4.** Dargestellt ist für das Ausgleichsgetriebe mit vier Ausgleichskegelrädem **13** die Lagerung der vier Differentialbolzen **12** in der zentralen Bolzenaufnahme **14** sowie die Verdrehsicherung des Bajonettverschlußes **5** durch die vier Differentialbolzen **12.** Im Teilauschnitt ist der Bajonettverschluß **5** im verriegelten Zustand zu sehen.

**Fig. 3** zeigt einen Ausschnitt für die Ausführung der Gehäuseverbindung mittels eines Gewindes **23**. Das Gewinde **23** ist Bestandteil der beiden zylindrischen Ansätze **6, 7** von Antriebs- **3** und Abschlußteil **4.** Der Differentialbolzen **12** ist nur im inneren zylindrischen Ansatz **6,** der hier zum Antriebsteil **3** gehört, gelagert. Der äußere zylindrische Ansatz **7** vom Abschlußteil **4** wird über die Bohrungen des Differentialbolzen geschoben und sichert damit den Differentialbolzen gegen herausrutschen.

Die Montage des Ausgleichsgetriebes beginnt mit der Vormontage des Antriebsteiles. Zuerst wird das Abtriebskegelrad **17** im Antriebsteil **3** positioniert. Über die ebene Anlaufscheibe **19** wird die axiale Stellung relativ zu den Differentialbolzen **12** festgelegt. Die Ausgleichskegelräder **13** werden an den entsprechenden Bohrungen der Differentialbolzen **12** eingelegt. Die axiale Ausrichtung der Ausgleichskegelräder **13** auf den Differentialbolzen **12** erfolgt über die kugelförmigen Anlaufscheiben **21.** Zuletzt wird die Bolzenaufnahme **14** mittels eines feststehenden Montagedoms in ihrer zentralen Position für die Endmontage fixiert. Dabei müssen die Bohrungen für die Differentialbolzen **12** fluchten, d. h. Antriebsteil **3,** Ausgleichskegelräder **13** und Bolzenaufnahme **14** sind entsprechend auszurichten.

Zur Vormontage des Abschlußteiles **4** wird das Abtriebskegelrad **18** relativ zur Paßfläche **7** eingemessen, mittels der Anlaufscheibe **20** in axialer Richtung ausgerichtet und dann im Abschlußteil **4** positioniert.

Bei der Endmontage wird das vormontierte Abschlußteil **4** in das vormontierte Antriebsteil **3** gesteckt und der Bajonettverschluß **5** durch Drehen des Abschlußteiles **4** gegen den Antriebsteil **3** verriegelt. Die verriegelte Position muß so gewählt werden, das gleichzeitig die Bohrungen für die Differentialbolzen **12** im Antriebsteil **3** und im Abschlußteil **4** fluchten. Abschließend werden alle vier Differentialbolzen **12** in diese Bohrungen eingeführt und durch das Abschlußteil **4,** durch das Antriebsteil **3** und durch die Ausgleichskegelräder **13** in die Bolzenaufnahme **14** gesteckt. Diese Endposition wird gesichert durch den Sprengring **15,** der auf jedem Differentialbolzen **12** sitzt und im Abschlußteil **4** in eine Nut einrastet. Damit dienen die Differentialbolzen **12** sowohl der Lagerung der Ausgleichskelgelräder **13** als auch der Entriegelungsssicherung des Bajonettverschlusses **5**.

Die Demontage des Ausgleichsgetriebes erfolgt, indem alle Differentialbolzen **12** aus ihrer Einbaulage, die mit den Sprengringen **15** gesichert ist, aus dem Ausgleichsgetriebegehäuse abgezogen werden. Dazu hat der Differentialbolzen **12** das Demontagegewinde **16,** wo ein geeignetes Abziehwerkzeug angesetzt werden kann. Die restliche Demontage erfolgt in umgekehrter Reihenfolge wie die Montage.

## Patentansprüche

1. Kegelrad-Ausgleichsgetriebe für den Achsantrieb eines Kraftfahrzeuges, mit einem geteilten Gehäuse, in dem ein Differentialbolzen **(12),** auf dern Differentialbolzen **(12)** gelagerte Ausgleichskegelräder **(13)** und Abtriebskegelräder **(17, 18)**, die Achsantriebswellen antreiben, angeordnet sind, wobei das Gehäuse aus einem Antriebsteil **(3)** und einem Abschlußteil **(4)** besteht, die über eine zylindrische Passung **(8)** verbunden und auf die Achsantriebswellen zentriert sind, und wobei
das Antriebsteil **(3)** und das Abschlußteil **(4)** zugehörige zylindrische Ansätze **(6, 7)** aufweisen, die die zylindrische Passung **(8)** zwischen Antriebsteil **(3)** und Abschlußteil **(4)** bilden, **dadurch gekennzeichnet, daß** die zylindrischen Ansätze **(6, 7)** sich axial beidseitig über den Bereich hinaus überlappen, in dem der Differentialbolzen **(12)** angeordnet ist.

2. Ausgleichsgetriebe nach Anspruch 1,
**dadurch gekennzeichnet, daß**
das Antriebsteil **(3)** mit dem Abschlußteil **(4)** mittels eines Bajonettverschlußes **(5)** gefügt ist.

3. Ausgleichsgetriebe nach Anspruch 1,
**dadurch gekennzeichnet, daß**
das Antriebsteil **(3)** mit dem Abschlußteil **(4)** mittels der zylindrischen Passung, die als Preßpassung ausgeführt ist, gefügt ist.

4. Ausgleichsgetriebe nach Anspruch 1, 2, oder 3,
**dadurch gekennzeichnet, daß**
der Differentialbolzen **(12)** im Antriebsteil **(3)** und im Abschlußteil **(4)** gelagert ist.

5. Ausgleichsgetriebe nach Anspruch 1, 2 oder 3
**dadurch gekennzeichnet, daß**
der Differentialbolzen **(12)** nur im radial inneren zylindrischen Ansatz **(6, 7)** von Antriebsteil **(3)** und Abschlußteil **(4)** gelagert ist.

## Claims

1. Bevel-gear differential for the axle drive of a motor vehicle, with a split housing, in which are arranged a differential bolt (12), differential bevel gears (13) mounted on the differential bolt (12) and driven bevel gears (17, 18) which drive axle drive shafts, the housing consisting of a drive part (3) and of a closing-off part (4) which are connected via a cylindrical fit (8) and are centred on the axle drive shafts, and
the drive part (3) and the closing-off part (4) having associated cylindrical extensions (6, 7) which form the cylindrical fit (8) between the drive part (3) and the closing-off part (4), **characterized in that** the cylindrical extensions (6, 7) overlap one another axially, on both sides, beyond the region in which the differential bolt (12) is arranged.

2. Differential according to Claim 1, **characterized in that** the drive part (3) is assembled together with the closing-off part (4) by means of a bayonet fastening (5).

3. Differential according to Claim 1, **characterized in that** the drive part (3) is assembled together with the closing-off part (4) by means of the cylindrical fit which is designed as a press fit.

4. Differential according to Claim 1, 2 or 3, **characterized in that** the differential bolt (12) is mounted in the drive part (3) and in the closing-off part (4).

5. Differential according to Claim 1, 2 or 3, **characterized in that** the differential bolt (12) is mounted only in the radially inner cylindrical extension (6, 7) of the drive part (3) and the closing-off part (4).

## Revendications

1. Différentiel à pignons coniques pour l'entraînement des essieux d'un véhicule à moteur, comprenant un boîtier divisé, dans lequel sont disposés un boulon de différentiel (12), des pignons coniques de différentiel (13) montés sur le boulon de différentiel (12) et des pignons coniques de sortie (17, 18), qui entraînent les arbres d'essieux, le boîtier se composant d'une partie d'entraînement (3) et d'une partie de fermeture (4), qui sont connectées par un ajustement cylindrique (8) et qui sont centrées sur les arbres d'essieux, et
la partie d'entraînement (3) et la partie de fermeture (4) présentant des prolongements cylindriques associés (6, 7), qui forment l'ajustement cylindrique (8) entre la partie d'entraînement (3) et la partie de fermeture (4), **caractérisé en ce que** les prolongements cylindriques (6, 7) se recouvrent axialement des deux côtés au-delà de la région dans laquelle est disposé le boulon de différentiel (12).

2. Différentiel selon la revendication 1, **caractérisé en ce que** la partie d'entraînement (3) est assemblée à la partie de fermeture (4) au moyen d'un joint à baïonnette (5).

3. Différentiel selon la revendication 1, **caractérisé en ce que** la partie d'entraînement (3) est assemblée à la partie de fermeture (4) au moyen de l'ajustement cylindrique, qui est réalisé en tant qu'ajustement serré.

4. Différentiel selon la revendication 1, 2 ou 3, **caractérisé en ce que** le boulon de différentiel (12) est monté dans la partie d'entraînement (3) et dans la partie de fermeture (4).

5. Différentiel selon la revendication 1, 2 ou 3, **caractérisé en ce que** le boulon de différentiel (12) est monté seulement dans le prolongement cylindrique radialement interne (6, 7) de la partie d'entraînement (3) et de la partie de fermeture (4).
